# EUROPEAN PATENT APPLICATION

(11) **EP 4 563 045 A1**
(43) Date of publication of application: **04.06.2025**
(21) Application number: 24216757.5
(22) Date of filing: 02.12.2024
(51) Int. Cl.: A47J 37/06

(54) **FRYING PAN, FRYING BASKET ASSEMBLY AND AIR FRYER**

(30) Priority: 01.12.2023 CN 202323277771 U; 01.12.2023 CN 202323285886 U
(71) Applicant: Ningbo Careline Electric Appliance Co., Ltd., Ningbo, Zhejiang 315000 (CN)
(72) Inventor: ZHANG, Yichi, Ningbo, Zhejiang (CN); PAN, Huayuan, Ningbo, Zhejiang (CN); HUO, Zhian, Ningbo, Zhejiang (CN)
(74) Representative: Meyer-Dulheuer MD Legal Patentanwälte PartG mbB

(57) **Abstract**

The present disclosure relates to a frying pan, a frying basket assembly and an air fryer. A frying pan, applied to an air fryer, characterized in that, the frying pan is provided with a plurality of arched protrusions at intervals in a transverse extending direction, the arched protrusions are suitable for being formed by upwards recessing of the frying pan, and the arched protrusions are provided with a plurality of air vents for hot air to pass.

## Description

### CROSS REFERENCE TO RELATED APPLICATIONS

The present disclosure claims priorities to the Chinese patent application No. 2023232777719 filed to the China Patent Office on December 1, 2023 and entitled "FRYING PAN, FRYING BASKET ASSEMBLY AND AIR FRYER", and the Chinese patent application No. 2023232858862 filed to the China Patent Office on December 1, 2023 and entitled "FOOD BASKET ASSEMBLY AND AIR FRYER", the entire contents of which are incorporated herein by reference.

### TECHNICAL FIELD

The present disclosure relates to the technical field of kitchen household appliances and cooking appliances, in particular to a frying pan, a frying basket assembly and an air fryer.

### BACKGROUND

Air fryers are favored by consumers for frying and baking food. Existing air fryers generally include a main body with a cooking chamber and a food basket detachably arranged in the cooking chamber. The food basket is internally provided with a frying pan with air vents, and the frying pan is suitable for the placement of food to be cooked. A frying pan of a traditional air fryer is generally of a flat plate structure, and after food is placed on the frying pan, hot air cannot reach the bottom of the food due to the obstruction of the food, so that users need to carry out a flipping operation when performing air frying cooking. In addition, a traditional frying basket assembly is usually of an undetachable structure, during use by users, it is inconvenient to clean, relatively singular in function and poor in adaptability, moreover, most frying basket assemblies have bottoms of a closed structure, and when food is fried and baked, grease is prone to accumulating at the bottoms of the food basket assemblies, affecting the taste of food and bringing poor user experience.

### SUMMARY

In a first aspect, the present invention provides a frying pan, applied to an air fryer. The frying pan is provided with a plurality of arched protrusions at intervals in a transverse extending direction, the arched protrusions are suitable for being formed by upwards recessing of the frying pan, and the arched protrusions are provided with a plurality of air vents for hot air to pass.

Further, opposite handle holes are arranged on two sides of the arched protrusion in the middle of the frying pan.

In a second aspect, the present invention further provides a frying basket assembly, including a frying basket body and an accommodating chamber with a top opening arranged inside the frying basket body. The frying pan according to any one of claims is detachably arranged in the accommodating chamber, supporting structures matching with the frying pan are arranged on side walls of the accommodating chamber, and the frying pan is suitable for being hung in the accommodating chamber through the supporting structures.

Further, the supporting structures matching with the frying pan are arranged on the side walls of the accommodating chamber, the frying pan is suitable for being hung in the accommodating chamber through the supporting structures, a plurality of protecting members are arranged at intervals on a periphery of the frying pan, and the frying pan is suitable for abutting against an inner wall of the accommodating chamber and the supporting structures respectively through the protecting members.

Further, a plurality of hot air holes for hot air to pass are formed in an inner wall of the frying basket body; and an oil receiving tray is arranged under the frying basket body, the oil receiving tray is suitable for completely covering the hot air holes, a gap exists between the bottom of the frying basket body and the bottom of the oil receiving tray, the oil receiving tray and the frying basket body are provided with corresponding latch assemblies, and the oil receiving tray is suitable for being detachably fixed at the bottom of the frying basket body through the latch assemblies.

Further, the latch assemblies include a plurality of fixing members and locking members, the fixing members and the locking members are suitable for being arranged on the oil receiving tray and the frying basket body correspondingly, the locking members are provided with locking grooves matching with the fixing members, when the fixing members and the locking grooves are engaged, the oil receiving tray is suitable for being fixedly connected to the bottom of the frying basket body, and when the fixing members and the locking grooves are disengaged, the oil receiving tray is suitable for being disengaged from the frying basket body.

Further, the frying basket assembly further includes a steamer rack matching with the frying basket body, the steamer rack and the frying basket body are provided with corresponding latch assemblies, and the steamer rack is suitable for being detachably and fixedly connected to the bottom of the frying basket body through the latch assemblies.

Further, the latch assemblies include a plurality of rotatable fixing members and locking members, the locking members are provided with locking grooves matching with the fixing members, the fixing members are provided with holding parts for holding, by rotating the fixing members through the holding parts, the fixing members and the locking grooves may be engaged and disengaged, and the locking members are suitable for being fixed on a frying basket; and the steamer rack and/or the oil receiving tray are/is provided with shaft holes corresponding to the fixing members, and the fixing members are suitable for being detachably arranged on the steamer rack and/or the oil receiving tray through the shaft holes.

Further, a surrounding edge which is turned outwards and matches with the bottom of the frying basket body is arranged at the top of each of the steamer rack and the oil receiving tray, and when the oil receiving tray or the steamer rack is mounted and fixed to the bottom of the frying basket body, the surrounding edge is suitable for abutting against the bottom of the frying basket body.

Further, the frying basket body includes an annular side wall and a bottom wall, the annular side wall is suitable for surrounding the bottom wall and defines a food storing chamber with the top open together with the bottom wall, the annular side wall is suitable for being formed by bending and splicing of meshed plates with meshes, a first wrapping edge for edge sealing is arranged at the top of the annular side wall, a second wrapping edge is arranged at a connection of the annular side wall and the bottom wall, and the second wrapping edge is suitable for connecting the annular side wall with the bottom wall.

Further, the frying basket body is provided with handles, the handles are wrapped with handle sleeves, and the handle sleeves are made of a heat-insulation high-temperature-resistant material.

In a third aspect, the present invention further provides an air fryer, including a fryer body, a cooking chamber with a top or lateral opening arranged inside the fryer body and an air frying system communicating with the cooking chamber and configured to produce a circulating hot stream, and the frying basket assembly according to the claims is detachably arranged in the cooking chamber through the top or lateral opening.

Further, a top cover capable of being turned to close and open the top opening is arranged at the top opening, and the top cover is provided with a window assembly corresponding to the frying basket assembly.

Further, the air frying system is arranged on an outer side of a rear portion of the cooking chamber, and a vent hole corresponding to the air frying system is formed in a side wall of a side of the cooking chamber adjacent to the air frying system; and a projection of a frying pan on the side wall of the cooking chamber is at least partially located in the middle of the vent hole.

Further, a flow guiding groove with front and rear openings is formed between every two adjacent arched protrusions, and the rear openings of at least a portion of the flow guiding grooves are suitable for directly facing the vent hole.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
Fig. 1 is an overall schematic diagram of an air fryer of the present disclosure.
Fig. 2 is an overall sectional view of an air fryer of the present disclosure.
Fig. 3 is an overall schematic diagram of a frying pan of an air fryer of the present disclosure.
Fig. 4 is a schematic diagram of an overall mounting state of an air fryer of the present disclosure.
Fig. 5 is an overall schematic structural diagram of a frying basket assembly of an air fryer of the present disclosure.
Fig. 6 is a schematic structural exploded view of a frying basket assembly of an air fryer of the present disclosure.
Fig. 7 is a schematic diagram of disassembly of a frying basket assembly of an air fryer of the present disclosure.
Fig. 8 is an overall schematic diagram of an oil receiving tray and a steamer rack of a frying basket assembly of an air fryer of the present disclosure.
Fig. 9 is a schematic partially-enlarged view of a frying basket assembly of an air fryer of the present disclosure.

### Reference numerals:

10-fryer body; 11-cooking chamber; 111-vent hole; 12-air frying system; 20-frying basket assembly; 21-frying basket body; 211-accommodating chamber; 212-supporting structure; 213-hot air hole; 22-protecting member; 23-oil receiving tray; 24-latch assembly; 25-handle; 30-frying pan; 31-arched protrusion; 312-top opening; 313-top cover; 314-window assembly; 32-air vent; 3211-hot air hole; 3212-annular side wall; 3213-bottom wall; 3214-first wrapping edge; 3215-second wrapping edge; 322-oil receiving tray; 323-steamer rack; 324-handle; 325-handle sleeve; 33-handle hole; 330-latch assembly; 331-fixing member; 3311-holding part; 332-locking member; 3321-locking groove; 34-flow guiding groove; and 340-surrounding edge.

### DETAILED DESCRIPTION

The present application provides a frying pan, a frying basket assembly and an air fryer, to solve the technical problems of poor steaming effect and poor user experience of existing electric steamers.

In order to solve the above technical problems, the present invention provides a frying pan 30, applied to an air fryer, which is characterized in that, the frying pan 30 is provided with a plurality of arched protrusions 31 at intervals in a transverse extending direction, the arched protrusions 31 are suitable for being formed by upwards recessing of the frying pan 30, and the arched protrusions are provided with a plurality of air vents 32 for hot air to pass.

In an optional embodiment, opposite handle holes 33 are arranged on two sides of the arched protrusion 31 in the middle of the frying pan 30.

The present invention further provides a frying basket assembly 20, including a frying basket body 21 and an accommodating chamber 211 with a top opening arranged inside the frying basket body 21, and the frying pan 30 according to claim 1 is detachably arranged in the accommodating chamber 211.

In an optional embodiment, supporting structures 212 matching with the frying pan 30 are arranged on side walls of the accommodating chamber 211, and the frying pan 30 is suitable for being hung in the accommodating chamber 211 through the supporting structures 212.

In an optional embodiment, a plurality of protecting members 22 are arranged at intervals on a periphery of the frying pan 30, and the frying pan 30 is suitable for abutting against an inner wall of the accommodating chamber 211 and the supporting structures 212 respectively through the protecting members 22.

In an optional embodiment, a plurality of hot air holes 213, 3211 for hot air to pass are formed in an inner wall of the frying basket body 21; and an oil receiving tray 23, 322 is arranged under the frying basket body 21, the oil receiving tray 23, 322 is suitable for completely covering the hot air holes 213, 3211, a gap exists between the bottom of the frying basket body 21 and the bottom of the oil receiving tray 23, 322, the oil receiving tray 23, 322 and the frying basket body 21 are provided with corresponding latch assemblies 24, 330, and the oil receiving tray 23, 322 is suitable for being detachably fixed at the bottom of the frying basket body 21 through the latch assemblies 24, 330.

In an optional embodiment, the latch assemblies 24, 330 include a plurality of fixing members 331 and locking members 332, the fixing members 331 and the locking members 332 are suitable for being arranged on the oil receiving tray 23, 322 and the frying basket body 21 correspondingly, the locking members 332 are provided with locking grooves 3321 matching with the fixing members 331, when the fixing members 331 and the locking grooves 3321 are engaged, the oil receiving tray 23, 322 is suitable for being fixedly connected to the bottom of the frying basket body 21, and when the fixing members 331 and the locking grooves 3321 are disengaged, the oil receiving tray 23, 322 is suitable for being disengaged from the frying basket body 21.

In an optional embodiment, the frying basket assembly 20 further includes a steamer rack 323 matching with the frying basket body 21, the steamer rack 323 and the frying basket body 21 are provided with corresponding latch assemblies 24, 330, and the steamer rack 323 is suitable for being detachably and fixedly connected to the bottom of the frying basket body 21 through the latch assemblies 24, 330.

In an optional embodiment, the latch assemblies 24, 330 include a plurality of rotatable fixing members 331 and locking members 332, the locking members 332 are provided with locking grooves 3321 matching with the fixing members 331, the fixing members 331 are provided with holding parts 3311 for holding, and by rotating the fixing members 331 through the holding parts 3311, the fixing members 331 and the locking grooves 3321 may be engaged and disengaged.

In an optional embodiment, the locking members 332 are suitable for being fixed on a frying basket; and the steamer rack 323 and/or the oil receiving tray 23, 322 are provided with shaft holes corresponding to the fixing members 331, and the fixing members 331 are suitable for being detachably arranged on the steamer rack 323 and/or the oil receiving tray 23, 322 through the shaft holes.

In an optional embodiment, a surrounding edge 340 which is turned outwards and matches with the bottom of the frying basket body 21 is arranged at the top of each of the steamer rack 323 and the oil receiving tray 23, 322, and when the oil receiving tray 23, 322 or the steamer rack 323 is mounted and fixed to the bottom of the frying basket body 21, the surrounding edge 340 is suitable for abutting against the bottom of the frying basket body 21.

In an optional embodiment, the frying basket body 21 includes an annular side wall 3212 and a bottom wall 3213, the annular side wall 3212 is suitable for surrounding the bottom wall 3213 and defines a food storing chamber with the top open together with the bottom wall 3213, and the annular side wall 3212 is suitable for being formed by bending and splicing of meshed plates with meshes.

In an optional embodiment, the frying basket body 21 includes an annular side wall 3212 and a bottom wall 3213, the annular side wall 3212 is suitable for surrounding the bottom wall 3213 and defines a food storing chamber with the top open together with the bottom wall 3213, and the annular side wall 3212 is suitable for being formed by bending and splicing of meshed plates with meshes.

In an optional embodiment, a first wrapping edge 3214 for edge sealing is arranged at the top of the annular side wall 3212, a second wrapping edge 3215 is arranged at a connection of the annular side wall 3212 and the bottom wall 3213, and the second wrapping edge 3215 is suitable for connecting the annular side wall 3212 with the bottom wall 3213.

In an optional embodiment, the frying basket body 21 is provided with handles 25, 324.

In an optional embodiment, the handles 25, 324 are wrapped with handle sleeves 325, and the handle sleeves 325 are made of a heat-insulation high-temperature-resistant material.

The present invention further provides an air fryer, including a fryer body 10, a cooking chamber 11 with a top or lateral opening arranged inside the fryer body 10 and an air frying system 12 communicating with the cooking chamber 11 and configured to produce a circulating hot stream, and the frying basket assembly 20 according to claim 3 is detachably arranged in the cooking chamber 11 through the top or lateral opening.

In an optional embodiment, a top cover 313 capable of being turned to close and open the top opening is arranged at the top opening 312, and the top cover 313 is provided with a window assembly 314 corresponding to the frying basket assembly 20.

In an optional embodiment, the air frying system 12 is arranged on an outer side of a rear portion of the cooking chamber 11, a vent hole 111 corresponding to the air frying system 12 is formed in a side wall of a side of the cooking chamber 11 adjacent to the air frying system 12, and a circulating hot stream produced by the air frying system 12 is suitable for entering and exiting from the cooking chamber 11 through the vent hole 111; and a projection of a frying pan 30 on the side wall of the cooking chamber 11 is at least partially located in the middle of the vent hole 111.

In an optional embodiment, a flow guiding groove 34 with front and rear openings is formed between every two adjacent arched protrusions 31, and the rear openings of at least a portion of the flow guiding grooves 34 are suitable for directly facing the vent hole 111.

Compared with the prior art, the present application has the beneficial effects:
in the present application, the plurality of arched protrusions protruding upwards are arranged on the frying pan at intervals, and the air vents are formed in the arched protrusions, such that food can be supported to enable a hot stream to heat the bottom of the food through the air vents, thereby avoiding a flipping operation during cooking, and the cooking effect on the food can further be improved effectively; and at the same time, the food is supported by the arched protrusions, which can further increase a thermal contact area of the food effectively, thereby improving heating efficiency.

In the present application, the oil receiving tray is arranged at the bottom of the frying basket and detachably connected with the frying basket, such that disassembly of the oil receiving tray and the frying basket for cleaning and replacing is facilitated, and thus the adaptability of the frying basket assembly is improved; and meanwhile, the oil receiving tray is arranged at the bottom of the frying basket, such that, during food frying and baking in the frying basket assembly, redundant grease inside the frying basket can flow into the oil receiving tray, avoiding the impact on the taste of food due to accumulation of the grease, and thus the user experience is improved.

For the objects, technical solutions and advantages of embodiments of the present disclosure to be clearer, the technical solutions in the embodiments of the present disclosure will be clearly and completely described below in conjunction with the accompanying drawings in the embodiments of the present disclosure, and it is apparent that the described embodiments are a part of the embodiments of the present disclosure rather than all the embodiments. Assemblies in the embodiments of the present disclosure described and illustrated in the accompanying drawings here can be usually arranged and designed in various different configurations.

Thus, the following detailed description of the embodiments of the present disclosure provided in the accompanying drawings is not intended to limit the scope of the present disclosure as claimed, but is merely representative of selected embodiments of the present disclosure. Based on the embodiments of the present disclosure, all other embodiments obtained by those of ordinary skill in the art without creative work shall fall within the protection scope of the present disclosure.

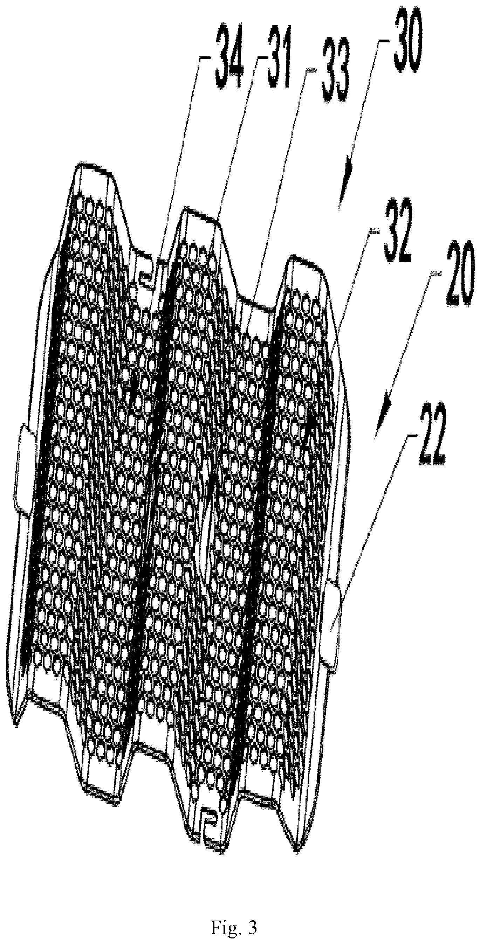

In a first aspect, Fig. 3 shows a schematic diagram of a frying pan 30 provided by the present embodiment, the frying pan 30 is suitable for being provided with a plurality of arched protrusions 31 at intervals in a transverse extending direction, the arched protrusions 31 are suitable for being formed by upwards recessing of the frying pan 30, and the arched protrusions 31 are provided with a plurality of air vents 32 for hot air to pass. The plurality of arched protrusions 31 protruding upwards are arranged on the frying pan 30 at intervals, and the air vents 32 are formed in the arched protrusions 31, such that food can be supported during cooking to enable a hot stream to heat the bottom of the food through the air vents 32, thereby avoiding a flipping operation during cooking, and the cooking effect on the food can further be improved effectively; and at the same time, the food is supported by the arched protrusions 31, which can further increase a thermal contact area of the food effectively, thereby improving heating efficiency.

As shown in Fig. 3, opposite handle holes 33 are arranged on two sides of the arched protrusion 31 in the middle of the frying pan 30. By arranging the opposite handle holes 33 on the two sides of the arched protrusion 31 in the middle of the frying pan 30, it is convenient for a user to perform operations such as moving and taking/placing on the frying pan 30, which can effectively improve the using convenience of the frying pan 30.

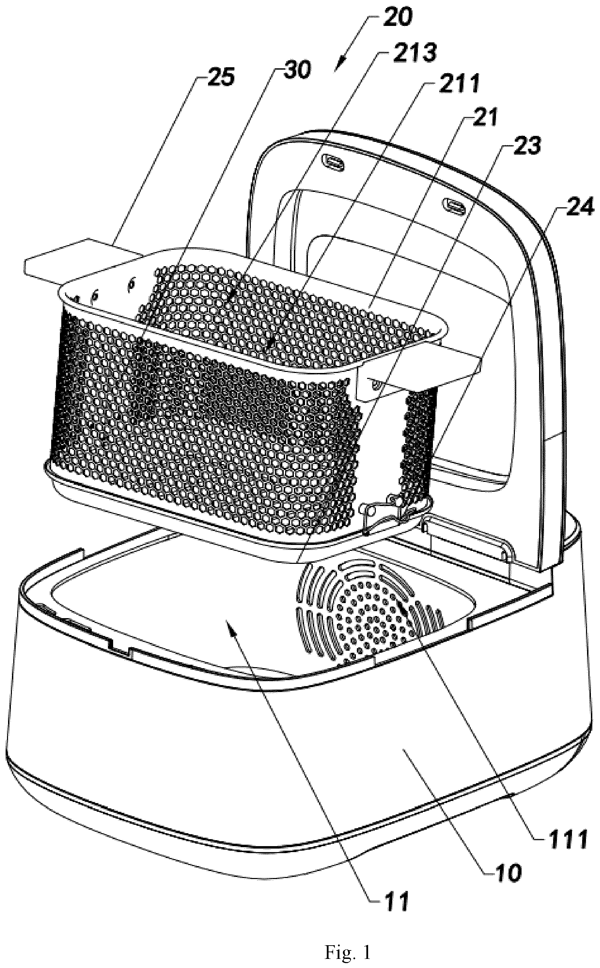

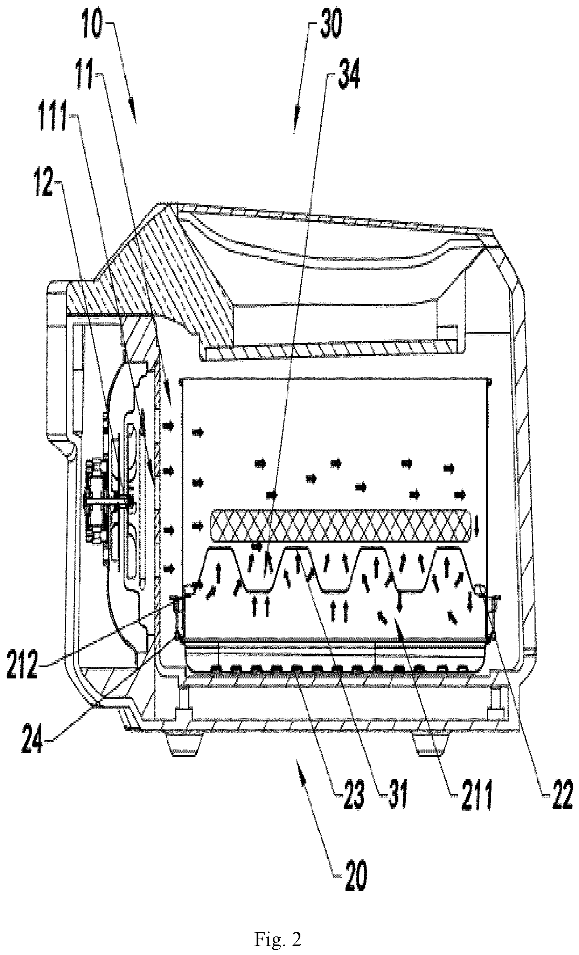

In a second aspect, as shown in Fig. 1 and Fig. 2, the present application further provides a frying basket assembly 20. The frying basket assembly 20 includes a frying basket body 21 and an accommodating chamber 211 with a top opening arranged inside the frying basket body 21, and the frying pan 30 as described above is detachably arranged in the accommodating chamber 211. The frying pan 30 is arranged inside the frying basket body 21, such that the frying basket assembly 20 can better cook food, and the practicability of the frying basket assembly 20 can further be effectively improved.

As shown in Fig. 1 and Fig. 2, supporting structures 212 matching with the frying pan 30 are arranged on side walls of the accommodating chamber 211, and the frying pan 30 is suitable for being detachably hung in the accommodating chamber 211 through the supporting structures 212. The frying pan 30 is hung in the accommodating chamber 211, such that a hot stream within the accommodating chamber 211 can better heat the bottom of food through the air vents 32 in the frying pan 30, which can effectively improve the food cooking effect and cooking efficiency.

As shown in Fig. 2 and Fig. 3, a plurality of protecting members 22 are arranged at intervals on a periphery of the frying pan 30, the protecting members 22 are provided with engaging grooves matching with the frying pan 30, and the protecting members 22 are suitable for being engaged with and fixed to the frying pan 30 through the engaging grooves. When the frying pan 30 is arranged in the accommodating chamber 211, the frying pan 30 is suitable for abutting against an inner wall of the accommodating chamber 211 and the supporting structures 212 respectively through the protecting members 22. The protecting members 22 are arranged on the periphery of the frying pan 30, such that the frying pan 30 can be prevented from rubbing the inner wall of the accommodating chamber 211 when taken out and placed into the accommodating chamber 211, which can effectively improve the user experience.

As shown in Fig. 1, a plurality of hot air holes 213 for hot air to pass are formed in an inner wall of the frying basket body 21; and an oil receiving tray 23 is arranged under the frying basket body 21, the oil receiving tray 23 and the frying basket body 21 are provided with corresponding latch assemblies 24, and the oil receiving tray 23 is suitable for being detachably fixed at the bottom of the frying basket body 21 through the latch assemblies 24. The hot air holes 213 are formed in the side wall and the bottom wall of the frying basket body 21, such that a hot stream can go in and out of the frying basket body 21 conveniently, improving the hot stream circulating efficiency in the frying basket body 21 and the cooking efficiency. Meanwhile, the oil receiving tray 23 is arranged at the bottom of the frying basket body 21, such that redundant grease inside the frying basket body 21 can be discharged, ensuring the taste of food, besides, grease can be prevented from dropping into an external environment to pollute the external environment when the food in the frying basket body 21 is taken out, effectively improving user experience.

As shown in Fig. 1, the frying basket body 21 is further provided with handles 25, the handles 25 are suitable for being arranged on two sides of the frying basket body 21 oppositely, and the handles 25 are suitable for being held to use by a user. The handles 25 are arranged on the frying basket body 21, such that the user can move and place the frying basket body 21 conveniently, which can effectively improve the using convenience of the frying basket body 21.

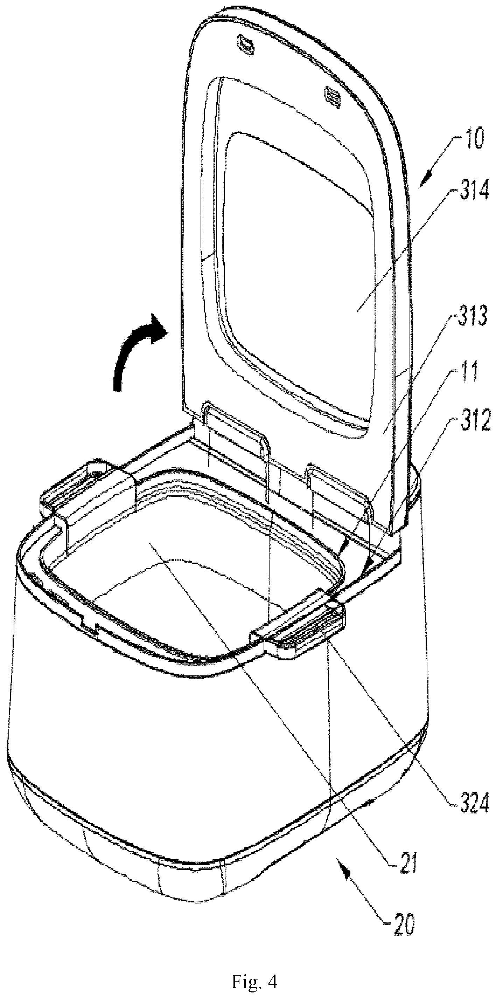

Specifically, Fig. 4 to Fig. 9 show schematic diagrams of a frying basket assembly provided by the present embodiment. The frying basket assembly 20 includes the frying basket body 21 and an oil receiving tray 322 arranged under the frying basket body 21 and matching with the frying basket body 21, hot air holes 3211 are formed in the bottom of the frying basket body 21, the oil receiving tray 322 is suitable for completely covering the hot air holes 3211, and a gap exists between the bottom of the frying basket body 21 and the bottom of the oil receiving tray 322. During food cooking, grease produced by frying and baking food in the frying basket body 21 is suitable for flowing into the oil receiving tray 322 through the hot air holes 3211, and being collected by the oil receiving tray 322. The oil receiving tray 322 is arranged at the bottom of the frying basket body 21 of the frying basket assembly 20, such that during food frying and baking in the frying basket assembly 20, redundant grease in the frying basket body 21 can flow into the oil receiving tray 322 so as to avoid the impact on food taste due to grease accumulation, thereby improving the user experience.

As shown in Fig. 4 to Fig. 6, the frying basket body 21 and the oil receiving tray 322 are provided with corresponding latch assemblies 330, and the oil receiving tray 322 is suitable for being detachably fixed at the bottom of the frying basket body 21 through the latch assemblies 330. The oil receiving tray 322 is arranged at the bottom of the frying basket body 21 of the frying basket assembly 20, and the oil receiving tray 322 is detachably connected to the frying basket body 21, such that not only is disassembly for cleaning and replacing of the oil receiving tray 322 and the frying basket body 21 convenient, but also the adaptability of the frying basket assembly 20 can be effectively improved, improving the user experience.

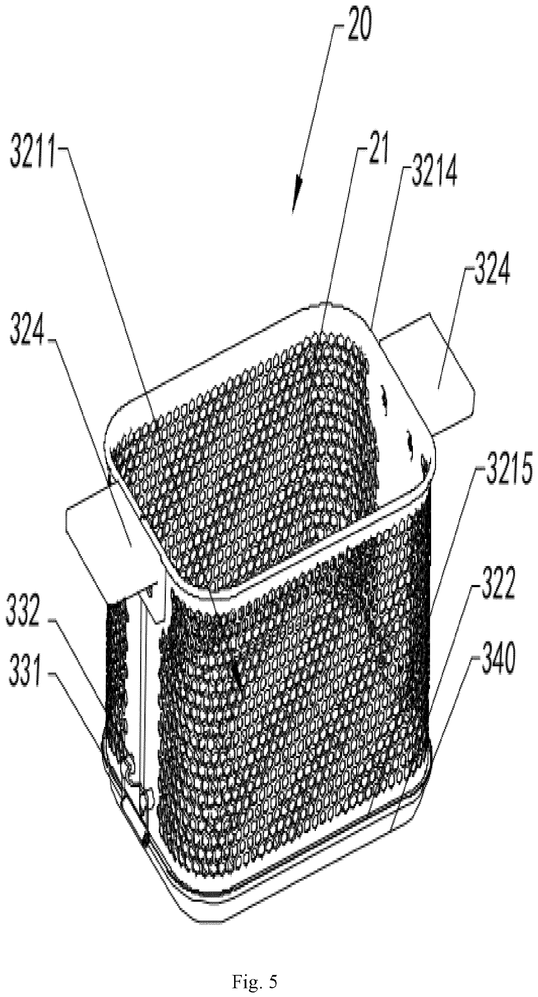

As shown in Fig. 5, the latch assemblies 330 include a plurality of fixing members 331 and locking members 332, the fixing members 331 and the locking members 332 are suitable for being arranged on the oil receiving tray 322 and the frying basket body 21 correspondingly, the locking members 332 are provided with locking grooves 3321 matching with the fixing members, when the fixing members 331 and the locking grooves 3321 are engaged, the oil receiving tray 322 is suitable for being fixedly connected to the bottom of the frying basket body 21, and when the fixing members 331 and the locking grooves 3321 are disengaged, the oil receiving tray 322 is suitable for being disengaged from the frying basket body 21. In the frying basket assembly 20, by means of the fixing members 331 and the locking members 332, disassembly and connection of the frying basket body 21 and the oil receiving tray 322 can be achieved. Meanwhile, the frying basket body 21 and the oil receiving tray 322 are connected through the fixing members 331 and the locking members 332, such that the difficulty of disassembly and connection of the frying basket body 21 and the oil receiving tray 322 can be lowered, and the using convenience of the frying basket assembly 20 is improved, thereby improving user experience.

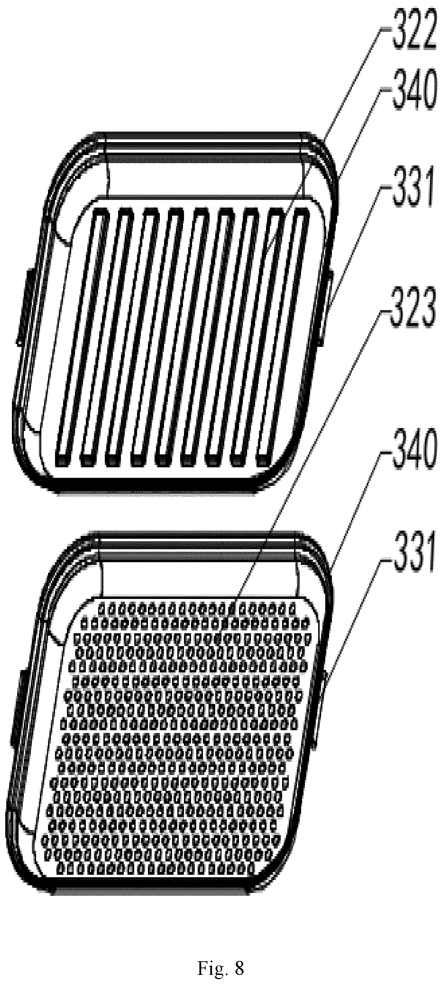

As shown in Fig. 8, the frying basket assembly 20 further includes a steamer rack 323 matching with the frying basket body 21, the steamer rack 323 and the frying basket body 21 are provided with corresponding latch assemblies 330, and the steamer rack 323 is suitable for being detachably and fixedly connected to the bottom of the frying basket body 21 through the latch assemblies 330. The steamer rack 323 is arranged at the bottom of the frying basket body 21, and the steamer rack 323 and the frying basket body 21 are connected through the latch assemblies 330, such that steam cooking of food can be achieved, thereby improving the adaptability and practicability of the frying basket assembly 20, besides, disassembly of the steamer rack 323 for cleaning and replacing is facilitated, and the using convenience of the frying basket assembly 20 and the user experience can be improved. Meanwhile, the frying basket body 21 and the steamer rack 323 are connected through the latch assemblies 330, such that a user can disassemble and switch the steamer rack 323 and the oil receiving tray 322 freely on own demands, thereby further improving the using convenience and practicability of the frying basket assembly 20.

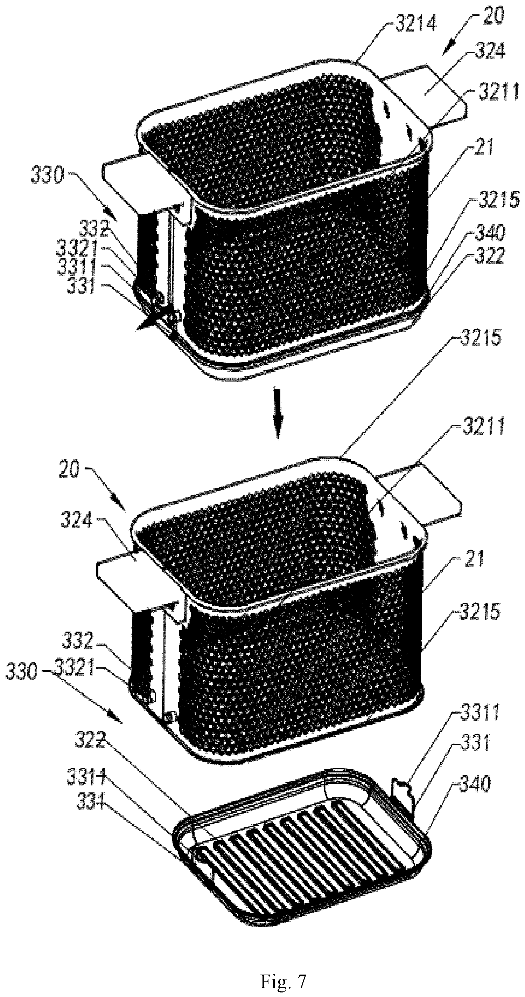

As shown in Fig. 7, the fixing members 331 of the latch assemblies 330 are preferably rotatable, the fixing members 331 are provided with holding parts 3311 for holding, and by rotating the fixing members 331 through the holding parts 3311, the fixing members 331 and the locking grooves 3321 may be engaged and disengaged. In the frying basket assembly 20, the holding parts 3311 are arranged on the fixing members 331 of the latch assemblies 330, such that a user can conveniently hold the holding parts 3311 to enable the fixing members 331 and the locking members 332 to be engaged and disengaged, thereby lowering the operation difficulty of the latch assemblies 330 and improving the using convenience of the latch assemblies 330 and the user experience.

As shown in Fig. 5 to Fig. 7, in an optional embodiment, the locking members 332 are preferably fixed on the frying basket body 21, the steamer rack 323 or the oil receiving tray 322 is provided with shaft holes corresponding to the fixing members 331, and the fixing members 331 are suitable for being detachably arranged on the steamer rack 323 or the oil receiving tray 322 through the shaft holes. The fixing members 331 are detachably arranged on the steamer rack 323 or the oil receiving tray 322, such that not only are disassembly and replacement of the fixing members 331 convenient, but also storage and transportation are convenient. Meanwhile, the fixing members 331 are detachably arranged on the steamer rack 323 or the oil receiving tray 322 through the shaft holes, such that the steamer rack 323 or the oil receiving tray 322 may share the fixing members 331, thereby simplifying the structure of the frying basket assembly 20 and lowering the production cost. In addition, in another optional embodiment, the fixing members 331 may further be detachably arranged on the steamer rack 323 and the oil receiving tray 322 through the shaft holes, and by arranging the fixing members 331 on both the steamer rack 323 and the oil receiving tray 322, using convenience can be improved, tedious steps of disassembling and mounting of the fixing members 331 are omitted, and user experience is improved.

As shown in Fig. 5 to Fig. 8, a surrounding edge 340 which is turned outwards and matches with the bottom of the frying basket body 21 is arranged at the top of each of the steamer rack 323 and the oil receiving tray 322, the surrounding edges 340 are suitable for being integrally molded with the steamer rack 323 and the oil receiving tray 322, and when the oil receiving tray 322 or the steamer rack 323 is mounted and fixed to the bottom of the frying basket body 21, the surrounding edge 340 is suitable for abutting against the bottom of the frying basket body 21. The surrounding edges are suitable for playing a positioning role, mounting of the oil receiving tray 322 and the steamer rack 323 is positioned through the surrounding edges, and thus the mounting difficulty of the oil receiving tray 322 and the steamer rack 323 can be lowered. Meanwhile, the surrounding edges are further suitable for playing a limiting role, when the steamer rack 323 or the oil receiving tray 322 is connected with the frying basket, the oil receiving tray 322 or the steamer rack 323 is limited by the surrounding edges 340, and thus the connection stability of the oil receiving tray 322 or the steamer rack 323 with the frying basket body 21 can be improved, thereby improving the structural reliability of the frying basket assembly.

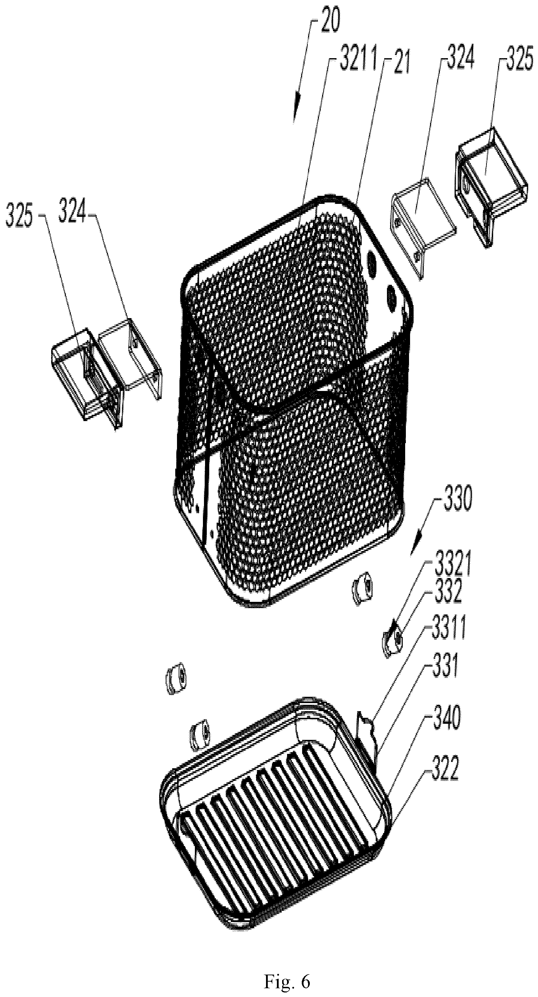

As shown in Fig. 6, handles 324 are arranged on two sides of the frying basket body 21, the handles 324 are wrapped with handle sleeves 325, and the handle sleeves 325 are preferably made of a heat-insulation high-temperature-resistant material. The handles 324 are arranged on the two sides of the frying basket body 21 for a user to hold for use, such that the user can perform operations such as lifting and moving on the frying basket body 21 conveniently, thereby improving the using convenience of the frying basket body 21. Meanwhile, the handles 324 are sleeved with the handle sleeves 325 made of the heat-insulation high-temperature-resistant material, such that heat transferred by the handles 324 can be isolated to avoid scalding, and the using safety of the frying basket assembly 20 and the user experience are effectively improved.

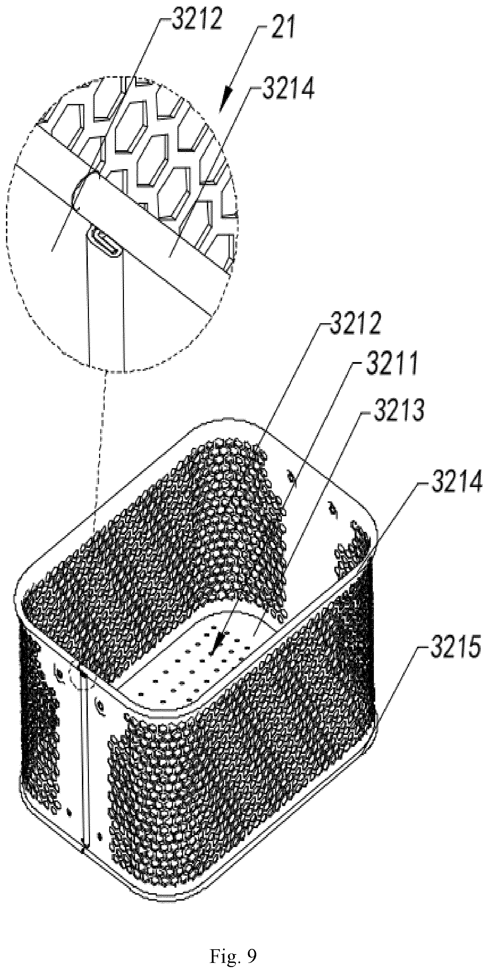

As shown in Fig. 9, the frying basket body 21 includes an annular side wall 3212 and a bottom wall 3213, the annular side wall 3212 is suitable for surrounding the bottom wall 3213 and defines a food storing chamber with the top open together with the bottom wall 3213, and the annular side wall 3212 is suitable for being formed by bending and splicing of meshed plates with meshes. The annular side wall 3212 is formed by bending and splicing of the meshed plates with meshes, such that not only can the structure and production flow of the frying basket body 21 be simplified, but also the production cost of the frying basket body 21 and the use cost for users can be lowered, improving the user experience.

As shown in Fig. 9, a first wrapping edge 3214 for edge sealing is arranged at the top of the annular side wall 3212, a second wrapping edge 3215 is arranged at a connection of the annular side wall 3212 and the bottom wall 3213, and the second wrapping edge 3215 is suitable for connecting the annular side wall 3212 with the bottom wall 3213. The first wrapping edge 3214 and the second wrapping edge 3215 are used for edge sealing of the annular side wall 3212 and the bottom wall 3213, such that not only can the overall beauty of the frying basket body 21 be improved, but also scratching, scuffing and the like of users can be avoided, which effectively improves the using safety and using handfeel of the users.

In a third aspect, as shown in Fig. 1 and Fig. 2, the present embodiment further provides an air fryer, including a fryer body 10. A cooking chamber 11 with a top opening 312 is arranged inside the fryer body 10, and the frying basket assembly 20 as described above is detachably arranged inside the cooking chamber 11 through the top opening 312. The frying basket assembly 20 is arranged inside the cooking chamber 11, so that the air fryer can cook food better, which effectively improves cooking efficiency and cooking effects of the air fryer.

Meanwhile, as shown in Fig. 1 and Fig. 2, an air frying system 12 is preferably arranged on an outer side of a rear portion of the cooking chamber 11, a vent hole 111 corresponding to the air frying system 12 is formed in a side wall of a side of the cooking chamber 11 adjacent to the air frying system 12, and a circulating hot stream produced by the air frying system 12 is suitable for entering and exiting from the cooking chamber 11 through the vent hole 111; and a projection of a frying pan 30 on the side wall of the cooking chamber 11 is preferably located in the middle of the vent hole 111. The air frying system 12 of the air fryer is arranged on a lateral portion of the cooking chamber 11, and food inside the cooking chamber 11 is heated in a lateral air entering mode, such that the food inside the cooking chamber 11 can be heated more uniformly, which can effectively improve the food cooking effect. Meanwhile, the frying pan 30 is arranged at the position corresponding to the middle of the vent hole 111, which can improve the circulating speed of the hot stream in the frying basket body 21, thereby improving the heating efficiency.

As shown in Fig. 3, in an optional embodiment, a flow guiding groove 34 with front and rear openings is formed between every two adjacent arched protrusions 31 of the frying pan 30, and the rear openings of the flow guiding grooves 34 directly face the vent hole 111 preferably. The flow guiding grooves 34 are suitable for guiding the hot stream entering the frying basket body 21, and by making the rear openings of the flow guiding grooves 34 directly facing the vent hole 111, the circulating speed of the hot stream inside the frying basket body 21 can be further improved, thereby improving heating efficiency.

Meanwhile, as shown in Fig. 1, a top cover 313 capable of being turned to close and open the top opening 312 is further arranged at the top opening 312, the top cover 313 is provided with a window assembly 314 corresponding to the frying basket assembly 20, and the window assembly 314 is preferably made of a high-temperature-resistant transparent material. In the air fryer, the window assembly 314 is arranged on the top cover 313, such that a user can visually observe a cooking situation of food inside the frying basket assembly 20 through the window assembly 314, and not only is cooking by the user facilitated, but also the cooking enjoyment and using experience of the user can be improved.

It should be noted that the terms used here are only intended to describe specific implementations and are not intended to limit exemplary implementations according to the present disclosure. As used herein, unless otherwise explicitly stated in the context, the singular form is also intended to include the plural form. Additionally, it should further be understood that, when the terms "comprising" and/or "including" are used in this specification, they indicate the presence of features, steps, operations, devices, assemblies and/or combinations thereof.

Unless otherwise specified specifically, the relative arrangement, numerical expressions and values of components and steps described in these embodiments do not limit the scope of the present disclosure. At the same time, it should be understood that for ease of description, the dimensions of the various parts shown in the accompanying drawings are not drawn according to an actual proportional relation. For technologies, methods, and equipment known to those of ordinary skill in the related art, detailed discussions may not be made, but in appropriate circumstances, such technologies, methods, and equipment should be considered as part of the granted specification. In all the examples shown and discussed here, any specific value should be interpreted as merely illustrative and not restrictive. Therefore, other examples of exemplary embodiments may have different values. It should be noted that: similar numerals and letters represent similar items in the following accompanying drawings. Therefore, once an item is defined in one accompanying drawing, it does not need to be further discussed in subsequent accompanying drawings.

The above provides a detailed introduction to the frying pan, the frying basket assembly and the air fryer provided in the present disclosure. Specific examples are applied herein to explain the principles and implementations of the present disclosure. The illustration of the above embodiments is only used to help understanding a method and its core idea of the present disclosure. Meanwhile, for those of ordinary skill in the art, there may be changes in the specific implementations and application scope based on the ideas of the present disclosure. In summary, the content of this specification should not be understood as limiting the present disclosure.

### Industrial Applicability

In the present application, the plurality of arched protrusions protruding upwards are arranged on the frying pan at intervals, and the air vents are formed in the arched protrusions, such that food can be supported to enable a hot stream to heat the bottom of the food through the air vents, thereby avoiding a flipping operation during cooking, and the cooking effect on the food can further be improved effectively; and at the same time, the food is supported by the arched protrusions, which can further increase a thermal contact area of the food effectively, thereby improving heating efficiency. Meanwhile, the oil receiving tray is arranged at the bottom of the frying basket and detachably connected with the frying basket, such that disassembly of the oil receiving tray and the frying basket for cleaning and replacing is facilitated, and thus the adaptability of the frying basket assembly is improved; and meanwhile, the oil receiving tray is arranged at the bottom of the frying basket, such that, during food frying and baking in the frying basket assembly, redundant grease inside the frying basket can flow into the oil receiving tray, avoiding the impact on the taste of food due to accumulation of the grease, and thus the user experience is improved.

## Claims

1. A frying pan (30), applied to an air fryer, **characterized in that**, the frying pan (30) is provided with a plurality of arched protrusions (31) at intervals in a transverse extending direction, the arched protrusions (31) are suitable for being formed by upwards recessing of the frying pan (30), and the arched protrusions are provided with a plurality of air vents (32) for hot air to pass.

2. The frying pan according to claim 1, **characterized in that**, opposite handle holes (33) are arranged on two sides of the arched protrusion (31) in the middle of the frying pan (30).

3. A frying basket assembly (20), **characterized by** comprising a frying basket body (21) and an accommodating chamber (211) with a top opening arranged inside the frying basket body (21), wherein the frying pan (30) according to any one of claims 1-2 is detachably arranged in the accommodating chamber (211), supporting structures (212) matching with the frying pan (30) are arranged on side walls of the accommodating chamber (211), and the frying pan (30) is suitable for being hung in the accommodating chamber (211) through the supporting structures (212).

4. The frying basket assembly according to claim 3, **characterized in that**, the supporting structures (212) matching with the frying pan (30) are arranged on the side walls of the accommodating chamber (211), the frying pan (30) is suitable for being hung in the accommodating chamber (211) through the supporting structures (212), a plurality of protecting members (22) are arranged at intervals on a periphery of the frying pan (30), and the frying pan (30) is suitable for abutting against an inner wall of the accommodating chamber (211) and the supporting structures (212) respectively through the protecting members (22).

5. The frying basket assembly according to claim 3, **characterized in that**, a plurality of hot air holes (213, 3211) for hot air to pass are formed in an inner wall of the frying basket body (21); and an oil receiving tray (23, 322) is arranged under the frying basket body (21), the oil receiving tray (23, 322) is suitable for completely covering the hot air holes (213, 3211), a gap exists between the bottom of the frying basket body (21) and the bottom of the oil receiving tray (23, 322), the oil receiving tray (23, 322) and the frying basket body (21) are provided with corresponding latch assemblies (24, 330), and the oil receiving tray (23, 322) is suitable for being detachably fixed at the bottom of the frying basket body (21) through the latch assemblies (24, 330).

6. The frying basket assembly according to claim 5, **characterized in that**, the latch assemblies (24, 330) comprise a plurality of fixing members (331) and locking members (332), the fixing members (331) and the locking members (332) are suitable for being arranged on the oil receiving tray (23, 322) and the frying basket body (21) correspondingly, the locking members (332) are provided with locking grooves (3321) matching with the fixing members (331), when the fixing members (331) and the locking grooves (3321) are engaged, the oil receiving tray (23, 322) is suitable for being fixedly connected to the bottom of the frying basket body (21), and when the fixing members (331) and the locking grooves (3321) are disengaged, the oil receiving tray (23, 322) is suitable for being disengaged from the frying basket body (21).

7. The frying basket assembly according to claim 3, **characterized in that**, the frying basket assembly (20) further comprises a steamer rack (323) matching with the frying basket body (21), the steamer rack (323) and the frying basket body (21) are provided with corresponding latch assemblies (24, 330), and the steamer rack (323) is suitable for being detachably and fixedly connected to the bottom of the frying basket body (21) through the latch assemblies (24, 330).

8. The frying basket assembly according to claim 7, **characterized in that**, the latch assemblies (24, 330) comprise a plurality of rotatable fixing members (331) and locking members (332), the locking members (332) are provided with locking grooves (3321) matching with the fixing members (331), the fixing members (331) are provided with holding parts (3311) for holding, by rotating the fixing members (331) through the holding parts (3311), the fixing members (331) and the locking grooves (3321) may be engaged and disengaged, and the locking members (332) are suitable for being fixed on a frying basket; and the steamer rack (323) and/or the oil receiving tray (23, 322) are/is provided with shaft holes corresponding to the fixing members (331), and the fixing members (331) are suitable for being detachably arranged on the steamer rack (323) and/or the oil receiving tray (23, 322) through the shaft holes.

9. The frying basket assembly according to any one of claims 7-8, **characterized in that**, a surrounding edge (340) which is turned outwards and matches with the bottom of the frying basket body (21) is arranged at the top of each of the steamer rack (323) and the oil receiving tray (23, 322), and when the oil receiving tray (23, 322) or the steamer rack (323) is mounted and fixed to the bottom of the frying basket body (21), the surrounding edge (340) is suitable for abutting against the bottom of the frying basket body (21).

10. The frying basket assembly according to any one of claims 3-9, **characterized in that**, the frying basket body (21) comprises an annular side wall (3212) and a bottom wall (3213), the annular side wall (3212) is suitable for surrounding the bottom wall (3213) and defines a food storing chamber with the top open together with the bottom wall (3213), the annular side wall (3212) is suitable for being formed by bending and splicing of meshed plates with meshes, a first wrapping edge (3214) for edge sealing is arranged at the top of the annular side wall (3212), a second wrapping edge (3215) is arranged at a connection of the annular side wall (3212) and the bottom wall (3213), and the second wrapping edge (3215) is suitable for connecting the annular side wall (3212) with the bottom wall (3213).

11. The frying basket assembly according to any one of claims 3-10, **characterized in that**, the frying basket body (21) is provided with handles (25, 324), the handles (25, 324) are wrapped with handle sleeves (325), and the handle sleeves (325) are made of a heat-insulation high-temperature-resistant material.

12. An air fryer, **characterized by** comprising a fryer body (10), a cooking chamber (11) with a top or lateral opening arranged inside the fryer body (10) and an air frying system (12) communicating with the cooking chamber (11) and configured to produce a circulating hot stream, wherein the frying basket assembly (20) according to any one of claims 3-11 is detachably arranged in the cooking chamber (11) through the top or lateral opening.

13. The air fryer according to claim 12, **characterized in that**, a top cover (313) capable of being turned to close and open the top opening is arranged at the top opening (312), and the top cover (313) is provided with a window assembly (314) corresponding to the frying basket assembly (20).

14. The air fryer according to claim 12, **characterized in that**, the air frying system (12) is arranged on an outer side of a rear portion of the cooking chamber (11), and a vent hole (111) corresponding to the air frying system (12) is formed in a side wall of a side of the cooking chamber (11) adjacent to the air frying system (12); and a projection of a frying pan (30) on the side wall of the cooking chamber (11) is at least partially located in the middle of the vent hole (111).

15. The air fryer according to claim 14, **characterized in that**, a flow guiding groove (34) with front and rear openings is formed between every two adjacent arched protrusions (31), and the rear openings of at least a portion of the flow guiding grooves (34) are suitable for directly facing the vent hole (111).
